# NEUE EUROPÄISCHE PATENTSCHRIFT

(11) **EP 3 044 136 B2**
(45) Veröffentlichungstag und Bekanntmachung des Hinweises auf die Entscheidung über den Einspruch: **21.06.2023**
(45) Hinweis auf die Patenterteilung: 05.07.2017
(21) Anmeldenummer: 14742543.3
(22) Anmeldetag: 25.07.2014
(51) Int. Cl.: B65G 47/08, B65G 47/71, B65G 54/02

(54) **VORRICHTUNG UND VERFAHREN ZUM GRUPPIEREN VON BEHÄLTERN**
APPARATUS AND METHOD FOR GROUPING CONTAINERS
APPAREIL ET PROCÉDÉ POUR GROUPER DES RÉCIPIENTS

(30) Priorität: 13.09.2013 DE 102013218397
(43) Veröffentlichungstag der Anmeldung: 20.07.2016
(73) Patentinhaber: Krones AG, 93073 Neutraubling (DE)
(72) Erfinder: HAHN, Wolfgang, 93073 Neutraubling (DE)
(74) Vertreter: Grünecker Patent- und Rechtsanwälte PartG mbB
(86) Internationale Anmeldenummer: PCT/EP2014/066040
(87) Internationale Veröffentlichungsnummer: WO 2015/036159

(56) Entgegenhaltungen:
- EP-A2- 2 407 846
- DE-A1- 2 358 771
- DE-A1-102008 040 204
- DE-A1-102011 075 176
- DE-A1-102011 075 178
- US-B1- 6 321 896

## Beschreibung

Die Erfindung betrifft eine Vorrichtung und ein Verfahren zum Gruppieren, und insbesondere zum Aussondern und/oder Verteilen, von in einem Behälterstrom geförderten Behältern sowie ein entsprechendes Verfahren.

Vor dem Verpacken befüllter Getränkebehälter, wie beispielsweise Flaschen, werden diese üblicherweise ungeordnet im Massentransport an den Einlauf einer Verpackungsmaschine gefördert, wo die Behälter durch ein Eindrängeln auf mehrere Fördergassen verteilt und schließlich der Verpackungsmaschine zugeführt werden. Alternativ können die Behälter einspurig zur Verpackungsmaschine transportiert werden und an deren Eingang gezielt auf mehrere Fördergassen verteilt werden. Vor dem Verpacken sind ferner als fehlerhaft erkannte Behälter aus dem Behälterstrom auszusondern.

Nachteilig beim ungeordneten Massentransport der Behälter ist, dass diese nach der Etikettierung zunächst verlangsamt und auf einen breiten Behälterstrom verteilt werden müssen. Dies verursacht einen beträchtlichen Geräteaufwand. Das anschließende Eindrängeln der Behälter in einzelne Fördergassen ist ebenso gerätetechnisch aufwändig, da spezielle Geländeraufbauten an den Fördereinrichtungen benötigt werden. Nachteilig ist ferner eine vergleichsweise hohe Störanfälligkeit, da sich die Behälter beim Eindrängeln verklemmen können.

Ein einspuriger Behältertransport mit anschließender Gassenverteilung, wie beispielsweise in der DE 4 343 477 C1 beschrieben, verursacht vergleichsweise lange Förderstrecken und eine große Anzahl von Antriebsaggregaten, beispielsweise um Lücken zwischen einzelnen Behältergruppen in einzelnen Fördergassen zu schließen und die vergleichsweise hohe Einlaufgeschwindigkeit aus dem einspurigen Behältertransport zu reduzieren. Dies verursacht einen unerwünscht hohen Platzbedarf und Geräteaufwand. Insbesondere die Verteilung einzelner Behälter auf Fördergassen, wie beispielsweise in der DE 10 2006 023531 A1 beschrieben, verursacht einen unerwünscht hohen Konstruktionsaufwand betreffend die mechanischen Komponenten und die Gerätesteuerung, da die Behälter mit vergleichsweise hohen Geschwindigkeiten und unter vergleichsweise hohen Beschleunigungen bewegt werden müssen.

Da die Behälter üblicherweise frei auf einer Förderkette oder dergleichen stehend gefördert werden, ist das Ausleiten fehlerhafter Behälter störanfällig, insbesondere falls sich einzelne Behälter durch Beschleunigungen oder Verzögerungen der Förderkette versetzt oder verschoben haben. DE 10 2011 075 176 A offenbart eine als Geradläufer ausgebildete Vorrichtung zur Reduzierung von Abständen zwischen transportierten Gegenständen. Von einer Band-Zufördereinrichtung übernommene Gegenstände werden mittels separat durch Linearantrieb steuerbaren Transportelementen mit daran befestigten Mitnehmern weitergefördert und bedarfsweise näher zusammengeschoben.

Aus der EP 2 511 203 A1 ist ferner eine Transporteinrichtung mit individuell angetriebenen Transportelementen beschrieben, die jeweils einzelnen Behältern oder Behältergebinden zugeordnet werden und mit denen sich eine vorgegebene Transportteilung zwischen den Behältern oder Behältergebinden an eine nachfolgende Behandlungseinheit anpassen lässt. Hierbei werden alle Behälter oder Gebinde des Produktstroms in gleicher Weise bewegt.

Es besteht somit der Bedarf für Vorrichtungen und Verfahren zum Gruppieren von Behältern, insbesondere für ein nachfolgendes Verteilen der Behälter und/oder unter Einbeziehen einer Ausleitfunktion für fehlerhafte Behälter, mit denen sich zumindest eines der oben genannten Probleme abmildern oder gar beheben lässt.

Die gestellte Aufgabe wird mit einer Vorrichtung nach Anspruch 1 gelöst. Demnach umfasst diese einen Auslaufstern und einen unmittelbar anschließenden Auslaufförderer. Der Auslaufförderer umfasst: mehrere mittels Linearmotorantrieb, separat angetriebene Fahrzeuge, an denen Positionierelemente zum Beeinflussen der Förderposition eines Behälters relativ zum Behälterstrom befestigt sind; und eine Förderstrecke für die Behälter, entlang der die Fahrzeuge beim Gruppieren der Behälter laufen.

Dadurch, dass die Fahrzeuge separat angetrieben sind, kann die Förderposition einzelner Behälter gezielt verändert werden, um die Behälter in Gruppen anzuordnen. Zu diesem Zweck lassen sich ausgewählte Behälter mit den Positionierelementen relativ zum Behälterstrom in Richtung der jeweils zugeordneten Behältergruppe verschieben.

Unter dem Beeinflussen der Förderposition ist zu verstehen, dass die Positionierelemente einzelne Behälter, bezogen auf den einlaufenden Behälterstrom, entgegen der Förderrichtung zum nachfolgenden Behälter hin verschieben, wobei die Positionierelemente dann als mechanischer Anschlag wirken. Die Positionierelemente sind insbesondere derart ausgebildet, dass sie die Seitenwände der Behälter vorauslaufend kontaktieren können, um Behälter gezielt gegenüber einer mittleren Fördergeschwindigkeit des Behälterstroms abzubremsen.

Die Förderstrecke kann beispielsweise ein mit konstanter Geschwindigkeit laufendes Förderband oder dergleichen umfassen, so dass die Fahrzeuge die Behälter sowohl mit dieser Geschwindigkeit führen als auch demgegenüber abbremsen können, beispielsweise in bestimmten Teilabschnitten der Förderstrecke. Die Förderposition der Behälter wird dann durch paarweises Abbremsen dieser Fahrzeuge beeinflusst. Dies ist z. B. bei einem Behältertransport im Neckhandling vorstellbar.

Die Fahrzeuge, die beispielsweise als Schlitten ausgebildet sein können und/oder auf Rollen laufen können und/oder an Führungsschienen entlang laufen können, werden vorzugsweise mittels eines Linearantriebs bewegt. Dieser umfasst beispielsweise entlang der Förderstrecke befestigte aktive Antriebskomponenten, wie Statoren zum Erzeugen eines elektromagnetischen Felds, und passive Antriebskomponenten an den Fahrzeugen, wie beispielsweise Permanentmagnete oder dergleichen. Die Fahrzeuge könnten jedoch auch aktive Antriebskomponenten umfassen, wie beispielsweise Elektromotoren. Entscheidend ist die individuelle Steuerbarkeit der Fahrzeuge.

Der Auslaufförderer ist derart ausgebildet, dass die Fahrzeuge selektiv entlang der Förderstrecke auf wenigstens eine vorgegebene Geschwindigkeit verzögert werden können. Hierbei werden die Fahrzeuge gegenüber einer von dem Auslaufförderer vorgegebenen Fördergeschwindigkeit verzögert. Folglich können einzelne Behälter gezielt verzögert werden, so dass nachfolgende Behälter auf den derart abgebremsten Behälter auflaufen.

Somit lassen sich Behälter allein durch Verzögern des vordersten Behälters zu einer Behältergruppe zusammen schieben. Es ist dann lediglich der Kontakt mit einem einzelnen vorauslaufenden Positionierelement herzustellen. Durch Vorgeben einer bestimmten Verzögerung des vordersten Behälters, und des zugeordneten Fahrzeugs, lässt sich beispielsweise auf einfache Weise die Anzahl der entlang einer bestimmten Länge der Förderstrecke auflaufenden Behälter einstellen. Je stärker das voraus laufende Fahrzeug abgebremst wird, desto mehr Behälter laufen zu einer Behältergruppe aufeinander auf. Mit einem nachlaufenden Positionierelement könnte die Behältergruppe dann zusätzlich zusammen gedrückt werden.

Vorzugsweise ist der Auslaufförderer derart ausgebildet, dass die Fahrzeuge unabhängig voneinander zum Auslaufstern fahren und mit den Positionierelementen vor und/oder nach einer individuell vorgebbaren Abfolge von Behältern in den Behälterstrom eingreifen. Darunter ist zu verstehen, dass beispielsweise ein erstes Positionierelement vorauslaufend vor dem ersten Behälter einer zu bildenden Behältergruppe eingreift. Ferner ist es denkbar, dass ein zweites Positionierelement nachlaufend hinter dem letzten Behälter der zu bildenden Behältergruppe eingreift. Ebenso können ein erstes Positionierelement vorauslaufend vor einem aus dem Behälterstrom auszusondernden Behälter und ein zweites Positionierelement hinter dem auszusondernden Behälter eingreifen.

Das gezielte Eingreifen der Positionierelemente in den Behälterstrom kann beispielsweise durch Steuersignale ausgelöst werden, die den Anfang und/oder das Ende einer zu bildenden Behältergruppe anzeigen oder einen auszusondernden Behälter identifizieren. Die Fahrzeuge können somit bedarfsabhängig an den Auslaufstern gefahren werden, um die Behälter oder Behältergruppen an vorgegebenen Positionen innerhalb des Behälterstroms zu übernehmen.

Somit lässt sich die Anzahl der Behälter in einzelnen Behältergruppen flexibel anpassen. Ebenso können einzelne Behälter gezielt einer bestimmten Behältergruppe zugeordnet oder aus dem Behälterstrom ausgesondert werden.

Vorzugsweise umfasst die erfindungsgemäße Vorrichtung eine Verteileinrichtung, um im Auslaufförderer gebildete Behältergruppen auf wenigstens zwei Fördergassen zu verteilen. Beispielsweise kann im Anschluss an die Förderstrecke eine Verteilstrecke ausgebildet sein, entlang der die Behältergruppen weiter gefördert jedoch nicht mehr von den Positionierelementen geführt werden.

Die Verteilstrecke kann beispielsweise in geradliniger Fortsetzung der Förderstrecke ausgebildet sein, insbesondere als durchgehende Fördereinrichtung, wie beispielsweise als durchgehendes Förderband oder dergleichen. Die Positionierelemente geben die Behälter beispielsweise dadurch frei, dass die Fahrzeuge vor der Verteilstrecke auf eine gesonderte Bahn abbiegen. Ebenso wäre es möglich, die Positionierelemente relativ zu den Fahrzeugen zu bewegen und dabei aus dem Behälterstrom herauszuschwenken oder zurückzuziehen.

Vorzugsweise umfasst die Verteileinrichtung Ablenkklappen und ist derart ausgebildet, dass die Ablenkklappen jeweils in Lücken zwischen den gebildeten Behältergruppen eingreifen. Diese Lücken entstehen beim Zusammenschieben der Behälter zu Behältergruppen. Die Transportteilung des Behälterstroms insgesamt muss daher nicht verändert werden, um geeignete Lücken für das Verteilen der Behältergruppen auf Transportgassen auszubilden. Insbesondere lassen sich die Behältergruppen dann mit herkömmlichen Ablenkklappen vergleichsweise einfach und zuverlässig auf nachfolgende Fördergassen verteilen.

Vorzugsweise umfasst der Auslaufförderer ferner eine Rückführbahn zum Zurückführen der Fahrzeuge zum Auslaufstern. Die Fahrzeuge können dann vor dem Auslaufstern in einer Warteposition geparkt werden. Von dort lassen sich die Fahrzeuge je nach Bedarf zum Auslaufstern fahren, so dass die Positionierelemente an vorgegebenen Positionen innerhalb des Behälterstroms eingreifen und die Behälter oder Behältergruppen übernehmen. Auf der Rückführbahn werden die Fahrzeuge vorzugsweise schneller zurückgeführt als sie entlang der Förderstrecke beim Gruppieren der Behälter laufen. Dadurch kann die Anzahl der insgesamt benötigten Fahrzeuge minimiert werden.

Vorzugsweise ist an der Rückführbahn wenigstens ein Ausleitbereich für aus dem Behälterstrom auszusondernde Behälter ausgebildet. Somit lassen sich auszusondernde Behälter zwischen zwei Fahrzeugen gezielt zum Ausleitbereich zu führen. Es können mehrere Ausleitbereiche mit zugeordneten Auffangbehältern oder dergleichen vorgesehen sein. Die Behälter werden beispielsweise im Ausleitbereich von den zugeordneten Positionierelementen freigegeben und in einen Auffangbehälter fallen gelassen. Der Ausleitbereich kann an der Rückführbahn platzsparend angeordnet werden.

Der Auslaufförderer umfasst wenigstens ein Förderband, das beispielsweise als Förderkette oder dergleichen ausgebildet sein kann, auf dem die Behälter beim Gruppieren stehen. Das Förderband läuft dann beispielsweise mit einer konstanten Fördergeschwindigkeit, insbesondere mit der Fördergeschwindigkeit des Auslaufsterns. Mit Hilfe der Positionierelemente können die Behälter auf dem Förderband stehend verschoben werden. Die Behältergruppen werden danach auf dem Förderband stehend weiter transportiert. Vorzugsweise ist auch im Bereich der Verteilstrecke und/oder in einem Förderbereich bis zum Ausleitbereich wenigstens ein Förderband vorhanden.

Mit derartigen Förderbändern können die Behälter beim Fördern von unten abgestützt werden. Mit Hilfe der Positionierelemente lassen sich die Behälter dabei aktiv führen. Im Bereich der Verteilstrecke werden die Behälter vorzugsweise nicht von den Positionierelementen geführt.

Vorzugsweise umfassen die Positionierelemente Zentrierabschnitte, die die Behälter beim Beeinflussen ihrer Förderposition quer zum Behälterstrom zentrieren. Darunter ist zu verstehen, dass die Behälter durch eine von den Positionierelementen in der Förderrichtung oder entgegen der Förderrichtung auf die Behälter ausgeübten Kraft in seitlicher Richtung zueinander zentriert werden. Die Zentrierabschnitte können beispielsweise als in der Draufsicht prismenförmige Aussparungen in den Positionierelementen ausgebildet sein, als Negativ einer Behälteraußenwand oder dergleichen.

Die gestellte Aufgabe wird ebenso mit einem Verfahren nach Anspruch 8 unter Verwendung der erfindungsgemäßen Vorrichtung gelöst. Demnach umfasst das erfindungsgemäße Verfahren einen Schritt, in dem wenigstens ein erster Behälter einer zu bildenden Behältergruppe mit einem der Positionierelemente vorauslaufend kontaktiert wird und das zugehörige Fahrzeug derart verzögert wird, dass die Behälter der Behältergruppe aufeinander auflaufen.

Beispielsweise wird das vorauslaufende Positionierelement gegenüber der Durchschnittsgeschwindigkeit des Behälterstroms insgesamt und/oder eines zugeordneten Förderbands abgebremst, so dass die zunächst mit der Durchschnittsgeschwindigkeit des Behälterstroms nachfolgenden Behälter nacheinander auf den jeweils vorauslaufenden, abgebremsten Behälter auflaufen. Somit ist ein einzelnes voraus laufendes Positionierelement ausreichend, um eine Behältergruppe auszubilden.

Je nach dem Ausmaß der Verzögerung des vorauslaufenden Positionierelements laufen dann entlang einer vorgegebenen Förderstrecke unterschiedlich viele Behälter zu einer Behältergruppe zusammen. Die Lücke zwischen einzelnen Behältergruppen wird dann dadurch gebildet, dass das das der nachfolgenden Behältergruppe zugeordnete vorauslaufende Positionierelement ebenfalls abgebremst wird.

Vorzugsweise wird ferner der letzte Behälter der zu bildenden Behältergruppe nachlaufend mit einem Positionierelement kontaktiert, derart, dass die Behälter der Behältergruppe zusammengeschoben und insbesondere geklemmt werden. Dies erlaubt eine besonders stabile aktive Führung der gebildeten Behältergruppe zwischen dem vorauslaufenden Positionierelement und dem nachlaufenden Positionierelement. Die Behältergruppe könnte dabei seitlich geführt werden, beispielsweise durch Führungsgeländer oder dergleichen.

Vorzugsweise werden aus dem Behälterstrom auszusondernde Behälter zwischen vorlaufenden und nachlaufenden Positionierelementen eingeklemmt und von den zugehörigen Fahrzeugen in einen Ausleitbereich geführt. Somit können die Positionierelemente sowohl zum Gruppieren von Behältern als auch zum Ausleiten von Behältern verwendet werden. Durch das Klemmen der Behälter zwischen den zugeordneten Positionierelementen können die Behälter mit den Fahrzeugen von der Förderstrecke seitlich abgelenkt und zum Ausleitbereich geführt werden.

Ein vom Auslaufstern vorgegebener Förderabstand wird zwischen den Behältern innerhalb der gebildeten Behältergruppen verringert und gleichzeitig zwischen den Behältergruppen vergrößert. Die Fördergeschwindigkeit des Behälterstroms insgesamt kann somit unverändert bleiben. Die Behälter werden beim Gruppieren vorzugsweise in Kontakt zueinander zusammengeschoben. Die Lücken zwischen benachbarten Behältergruppen werden vorzugsweise im entsprechend Ausmaß vergrößert. Die Lücken zwischen einzelnen Behältergruppen können jedoch durch das Aussondern einzelner Behälter auch zusätzlich vergrößert werden. In jedem Fall können auf besonders einfache Weise ausreichend große Lücken zwischen den einzelnen Behältergruppen ausgebildet werden, um die Behältergruppen nachfolgend auf mehrere Gassen zu verteilen.

Vorzugsweise werden die Behälter gruppenweise auf parallel geschaltete Fördergassen verteilt. Dadurch lässt sich der Behälterstrom einfach und gleichmäßig auf mehrere parallele Behälterströme für das anschließende Verpacken der Behälter aufteilen.

Vorzugsweise wird das Fehlen aus dem Behälterstrom ausgesonderter Behälter durch Anpassen der Größe gebildeter Behältergruppen und/oder durch gewichtetes Verteilen der gebildeten Behältergruppen auf die Fördergassen kompensiert, um die Anzahl der geförderten Behälter gleichmäßig auf die Fördergassen zu verteilen.

Beispielsweise könnte auf das Aussondern wenigstens eines Behälters aus einer Behältergruppe die Anzahl der Behälter bei nachfolgend in dieselbe Fördergasse geleiteten Behältergruppen entsprechend erhöht werden. Ebenso könnten die in die anderen Fördergassen geleiteten Behältergruppen entsprechend verkleinert werden. Es wäre auch denkbar, die Anzahl der in einzelnen Fördergassen auf Grund des Aussonderns fehlenden Behälter zu registrieren und bei Bedarf zusätzliche Behältergruppen mit geeigneter Gruppenstärke in eine bestimmte Fördergasse zu leiten. Somit lassen sich die Fördergassen innerhalb einer vorgegebenen Toleranz parallel mit gleichartigen Behälterströmen versorgen.

Bevorzugte Ausführungsformen der erfindungsgemäßen Vorrichtung sind in der Zeichnung dargestellt. Es zeigen:
- Fig. 1: eine schematische Draufsicht auf eine erste Ausführungsform der erfindungsgemäßen Vorrichtung;
- Fig. 2: eine schematische Draufsicht auf eine zweite bevorzugte Ausführungsform; und
- Fig. 3: eine schematische Draufsicht auf eine dritte bevorzugte Ausführungsform.

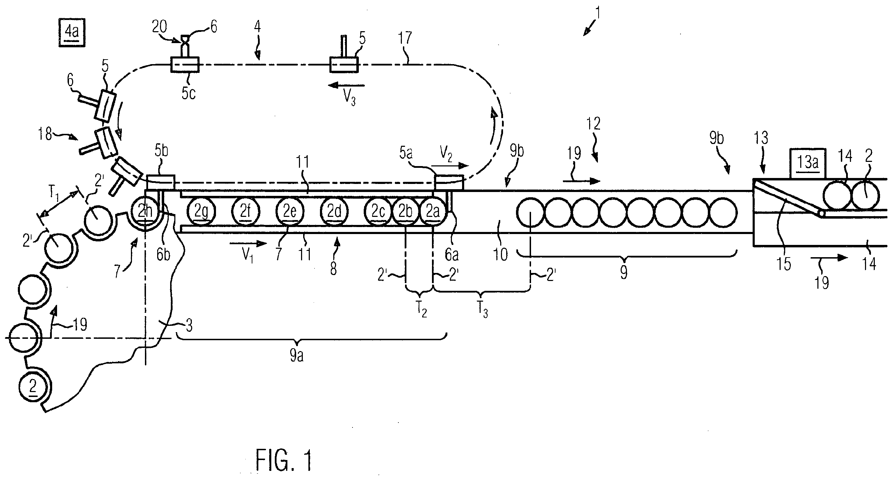

Wie die Fig. 1 erkennen lässt, umfasst eine erste Ausführungsform 1 der erfindungsgemäßen Vorrichtung zum Gruppieren von Behältern 2, wie beispielsweise Flaschen oder dergleichen, einen Auslaufstern 3, der die Behälter 2 als kontinuierlichen Behälterstrom mit einer Transportteilung T1 bereitstellt. Unmittelbar anschließend an den Auslaufstern 3 befindet sich ein Auslaufförderer 4 mit unabhängig voneinander angetriebenen Fahrzeugen 5, an denen jeweils Positionierelemente 6 für die Behälter 2 befestigt sind. Zwischen dem Auslaufstern 3 und dem Auslaufförderer 4 ist ein Übergabebereich 7 ausgebildet, in dem die Behälter 2 vom Auslaufförderer 4 übernommen werden. Im Anschluss an den Übergabebereich 7 ist an dem Auslaufförderer 4 eine vorzugsweise geradlinige Förderstrecke 8 ausgebildet, entlang der die Behälter 2 zu Behältergruppen 9 zusammengefasst werden. Eine Reihe zu gruppierender Behälter 2a-2g steht im gezeigten Beispiel auf einem schematisch angedeuteten Förderband 10, das beispielsweise als Transportkette oder dergleichen ausgebildet sein kann.

Die Behälter 2 werden von dem Auslaufstern 3 mit einer Geschwindigkeit V1 antransportiert. Das Förderband 10 läuft vorzugsweise mit derselben Geschwindigkeit V1. Mit Hilfe eines vorauslaufenden Fahrzeugs 5a und dem zugehörigen Positionierelement 6a wird der vorderste Behälter 2a einer zu bildenden Behältergruppe 9a auf eine Geschwindigkeit V2 abgebremst. Die nachfolgenden Behälter 2b-2g der zu bildenden Behältergruppe 9a laufen mit der Geschwindigkeit V1 auf den jeweils voraus laufenden Behälter auf. Schließlich sind die Behälter 2a-2g der Behältergruppe 9a im Kontakt miteinander. Beim Gruppieren können die Behälter 2a-2g beispielsweise mit Hilfe seitlicher Führungsgeländer 11 oder dergleichen geführt werden.

Die Gruppierung der Behälter 2a-2g bewirkt, dass die Transportteilung T1 auf einen Wert T2 zwischen den Behältern 2a-2g der zu bildenden Behältergruppe 9a reduziert und dabei auf einen Wert T3 zwischen den gebildeten Behältergruppen 9 erhöht wird. Wie in der Fig. 1 schematisch angedeutet ist, bleibt die Transportteilung T2 zwischen den Behältern 2 der gebildeten Behältergruppe 9 und die Transportteilung T3 zwischen gebildeten Behältergruppen 9 auf einer an die Förderstrecke 8 anschließenden Verteilstrecke 12 erhalten. Die Transportteilung ist der jeweilige Abstand zwischen den Förderpositionen 2' im Förderstrom benachbarter Behälter 2.

Stromabwärts des Auslaufförderers 4 ist eine Verteileinrichtung 13 ausgebildet, mit der sich die gebildeten Behältergruppen 9 auf parallele geschaltete Fördergassen 14 verteilen lassen. Zu diesem Zweck umfasst die Verteileinrichtung 13 beispielsweise wenigstens eine lediglich schematisch angedeutete Ablenkklappe 15 oder dergleichen. Die prinzipielle Funktion derartiger Weichen ist bekannt. Die Verteileinrichtung 13 ist beispielsweise mit Hilfe einer Steuereinrichtung 13a derart schaltbar, dass die Ablenkklappe 15 jeweils in die zwischen den Behältergruppen 9 ausgebildeten Lücken 9b eingreifen, um die gebildeten Behältergruppen 9 auf eine der Fördergassen 14 zu leiten.

Wie die Fig. 1 ferner schematisch erkennen lässt, umfasst der Auslaufförderer 4 vorzugsweise eine Rückführbahn 17 für die Fahrzeuge 5, entlang der diese zum Auslaufstern 3 zurücklaufen. Die Fahrzeuge 5 werden vorzugsweise in einem Wartebereich 18 vor dem Auslaufstern 3 geparkt und können von dort selektiv in den Übergabebereich 7 gefahren werden. In diesem laufen die Fahrzeuge 5 vorzugsweise mit dem Auslaufstern 3 derart synchronisiert, dass die Positionierelemente 6 vorauslaufend oder nachlaufend in den Behälterstrom eingreifen und die Behälter 2 im Übergabebereich 7 für die anschließende Förderung und Gruppierung übernehmen. In der Fig. 1 ist dies beispielhaft für das Fahrzeug 5b gezeigt, das vorauslaufend vor dem ersten Behälter 2h einer nachfolgenden Behältergruppe eingreift.

Die Fahrzeuge 5 laufen auf der Rückführbahn 17 vorzugsweise mit einer höheren Geschwindigkeit V3 zurück als beim Gruppieren entlang der Förderstrecke 8, beispielhaft repräsentiert durch die Geschwindigkeiten V1 und V2. Somit werden nur relativ wenige Fahrzeuge 5 benötigt, um einen kontinuierlich umlaufenden Betrieb der Fahrzeuge 5 mit einer ausreichenden Anzahl im Wartebereich 18 geparkter Fahrzeugen 5 zu gewährleisten.

Die Positionierelemente 6 können quer zur Förderrichtung 19 des Behälterstroms zentrierend ausgebildet sein. Zu diesem Zweck umfassen die Positionierelemente 6 beispielsweise konturierte Zentrierabschnitte 20, in Form von in der Draufsicht prismenförmigen Einkerbungen oder anderweitigen Einwölbungen und/oder Ausbuchtungen. Dies ist in der Fig. 1 lediglich schematisch für ein auf der Rückführbahn 17 laufendes Fahrzeug 5c angedeutet.

Für die separate Ansteuerung der Fahrzeuge 5 dient beispielsweise eine Steuereinheit 4a, die die Fahrzeuge 5 synchronisiert mit dem zu gruppierenden Behälterstrom in den Übergabebereich 7 fährt und geeignete Geschwindigkeitsänderungen der Fahrzeuge 5 entlang der Förderstrecke 8 bewirkt. Hierzu können beispielsweise unterschiedliche Geschwindigkeitsprofile oder dergleichen für die Gruppierung und/oder das Aussondern von Behältern 2 abgespeichert sein.

Der Antrieb der einzelnen Fahrzeuge 5 erfolgt vorzugsweise mittels eines Linearantriebs, der in prinzipiell bekannter Weise entlang der Förderstrecke 8 und der Rückführbahn 17 stationär angeordnete Linearmotoren (nicht dargestellt) umfassen kann sowie zugehörige passive Antriebskomponenten in den Fahrzeugen 5, beispielsweise Permanentmagnete (nicht dargestellt). Linearmotoren können beispielsweise in stationäre Führungselemente, wie Führungsschienen und/oder Führungsgeländer, für die Fahrzeuge 5 integriert sein und für deren Antrieb geeignete Magnetfelder oder dergleichen erzeugen. Entscheidend hierbei ist, dass der Antrieb der einzelnen Fahrzeuge 5 individuell mit der Steuereinheit 4a gesteuert werden kann.

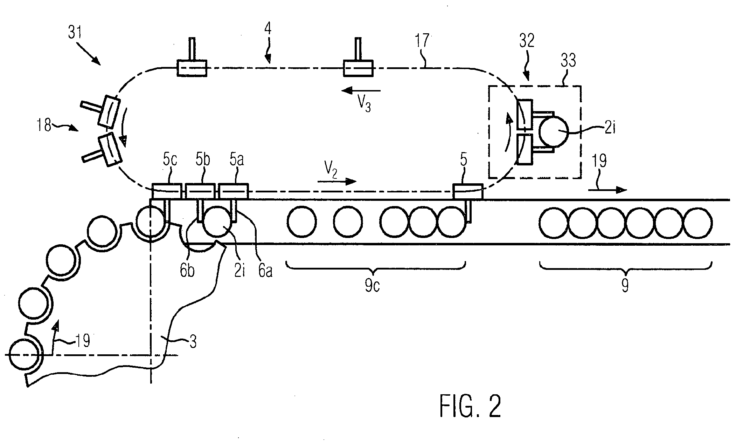

In der Fig. 2 ist eine zweite bevorzugte Ausführungsform 31 dargestellt, die sich von der ersten Ausführungsform 1 im Wesentlichen nur dadurch unterscheidet, dass ein Ausleitbereich 32 an der Rückführbahn 17 vorgesehen ist. Wie in der Fig. 2 beispielhaft dargestellt ist, können einzelne Behälter 2i, die aus dem Behälterstrom auszusondern sind, zwischen dem Positionierelement 6a eines vorauslaufenden Fahrzeugs 5a und dem Positionierelement 6b eines nachlaufenden Fahrzeugs 5b geklemmt oder gehalten werden und bis zum Ausleitbereich 32 geführt werden. In diesem ist beispielsweise ein schematisch angedeuteter Auffangbehälter 33 für ausgesonderte Behälter 2i vorgesehen, in den diese beispielsweise von den Positionierelementen 6a, 6b fallengelassen werden kann. Dazu können die Fahrzeuge 5a, 5b auseinander gefahren werden. Es können auch mehrere derartige Ausleitbereiche 32 an der Rückführbahn 17 hintereinander liegend ausgebildet sein, so dass stets ein aufnahmebereiter Auffangbehälter 33 vorgehalten werden kann.

Wie die Fig. 2 schematisch erkennen lässt, gehört der auszuleitende Behälter 2i zu einer zu bildenden Behältergruppe 9c, bei der gegenüber einer vorauslaufenden, bereits gebildeten Behältergruppe 9 die Behälteranzahl um den auszuleitenden Behälter 2i reduziert ist. Die nächste Behältergruppe beginnt dann beispielsweise hinter einem unmittelbar nachfolgenden Fahrzeug 5c.

Die Behältergruppen 9, 9c können auf die anschließenden Fördergassen 14 in der zuvor beschriebenen Weise verteilt werden. Das Fehlen ausgeleiteter Behälter 2i in einzelnen Behältergruppen 9c lässt sich beispielsweise dadurch kompensieren, dass derjenigen Fördergasse 14, in die die Behältergruppe 9c mit reduzierter Behälteranzahl eingeleitet wurde, nachfolgend eine Behältergruppe mit entsprechend höherer Behälteranzahl zugeführt wird. Ebenso wäre es denkbar, bei einem nachfolgenden Verteilvorgang die Größe der Behältergruppen, die in die übrigen Fördergassen 14 geleitet werden, um jeweils einen Behälter 2 zu reduzieren.

Es wäre auch denkbar, die Verteilung der Behälter 2 auf die einzelnen Fördergassen 14 dadurch zu korrigieren, dass eine Behältergruppe 9 mit nomineller Behälteranzahl erst dann zusätzlich in eine der Fördergassen 14 geleitet wird, sobald in dieser Fördergasse 14 die Behälteranzahl einer nominellen Behältergruppe 9 fehlt. Zu diesem Zweck könnte die Gruppierung und das Ausleiten einzelner Behälter in der Steuereinheit 4a oder 13a protokolliert werden und die Verteileinrichtung 13 dann je nach Bedarf entsprechend angesteuert werden. Die Verteileinrichtung 13 ist in der Fig. 2 der Einfachheit halber nicht dargestellt.

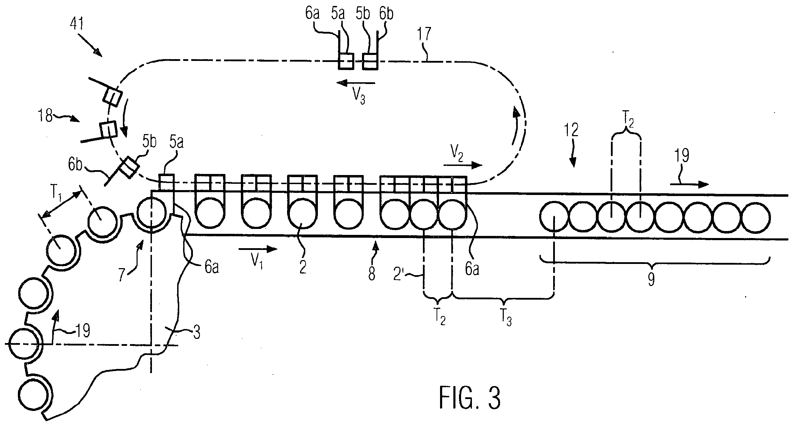

Die Fig. 3 zeigt eine dritte bevorzugte Ausführungsform 41, die sich von den zuvor beschriebenen Ausführungsformen im Wesentlichen dadurch unterscheidet, dass jeweils zwei Fahrzeuge 5a, 5b und ihre Positionierelemente 6a, 6b paarweise vorauslaufend und nachlaufend zusammenwirken. Es wird dann jeweils ein Behälter 2 von einem Paar Fahrzeugen 5 und Positionierelementen 6 gehalten oder geklemmt. In der Fig. 3 sind die zugehörigen Fördereinrichtungen und Verteileinrichtungen, die an sich den zuvor beschriebenen Ausführungsformen entsprechen können, der Einfachheit halber nicht dargestellt.

Beim paarweisen Zusammenwirken der Fahrzeuge 5 sind die Positionierelemente 6 vorzugsweise derart ausgebildet, dass die Fahrzeuge 5 und die Positionierelemente 6 lückenlos aneinander gefahren werden können. Es lässt sich dann eine in der Fig. 3 schematisch dargestellte Reduzierung der einlaufseitigen Transportteilung T1 auf die Transportteilung T2 zwischen den gruppierten Behältern 2 einer gemeinsamen Behältergruppe 9 realisieren. Es werden dann jeweils ein vorauslaufendes Fahrzeug 5a und ein nachlaufendes Fahrzeug 5b mit der Bewegung des Auslaufsterns 3 synchronisiert in den Übergabebereich 7 gefahren und der zugehörige Behälter 2 zwischen den zugeordneten Positionierelementen 6a und 6b eingeklemmt oder gehalten. Nach dem Verlassen des Übergabebereichs 7 werden die Fahrzeuge 5a und 5b dann paarweise von der ersten Fördergeschwindigkeit V1 auf eine zweite Fördergeschwindigkeit V2 verzögert. Die Behälter 2 einer gemeinsamen Behältergruppe 9 werden dann von je zwei Fahrzeugen 5a, 5b und den zugehörigen Positionierelementen 6a, 6b gehalten und gruppiert.

Am Ende der Förderstrecke 8 werden die gruppierten Behälter 2 von den jeweiligen Fahrzeugen 5a, 5b und/oder den zugehörigen Positionierelementen 6a, 6b freigegeben. Beispielsweise können die Fahrzeuge 5a, 5b entlang der Rückführbahn 17 von der Förderstrecke 8 und der nachfolgenden Verteilstrecke 12 weg geführt werden. Zusätzlich oder alternativ können die Positionierelemente 6a, 6b von den Behältern 2 weg geschwenkt oder zurückgezogen werden, um die Behälter 2 am Ende der Förderstrecke 8 freizugeben.

Die anschließende Verteilung der Behältergruppen 9 auf nachfolgende Fördergassen 14 kann dann in der oben beschriebenen Weise erfolgen. Ebenso können auszusondernde Behälter 2i von je einem Paar Fahrzeugen 5a, 5b bis in einen an der Rückführbahn 17 vorgesehenen Ausleitbereich 32 geführt und dort in der beschriebenen Weise aus den Behälterstrom ausgeleitet werden.

Der Auslaufstern 3 kann herkömmlicher Bauart und Bestandteil einer Etikettiermaschine oder dergleichen sein. Folglich lässt sich die erfindungsgemäße Vorrichtung und das entsprechende Verfahren zum Gruppieren, Aussondern und/oder Verteilen von Behältern 2 flexibel an Auslaufsterne nahezu beliebiger Behandlungsanlagen anpassen. Die hierfür benötigten Fahrzeuge 5 mit Individualantrieb sowie die zugehörigen Führungselemente für die Fahrzeuge, wie beispielsweise Schienen oder dergleichen, sind an sich bekannt und daher nicht näher erläutert.

Die Ansteuerung der einzelnen Fahrzeuge 5 erfolgt beispielsweise auf der Grundlage zuvor gewonnener Inspektionsergebnissen, mit deren Hilfe auszusondernde Behälter 2i im Produktstrom identifiziert werden können. Es werden dann beispielsweise geeignete Steuersignale an die Steuereinheit 4a übermittelt, die ein vorauslaufendes Fahrzeug 5a und ein nachlaufendes Fahrzeug 5b in den Übergabebereich 7 fährt, um den auszusondernden Behälter in den Ausleitbereich 32 zu führen.

Die Positionierelemente 6a, 6b können sowohl für ein kraftschlüssiges als auch für ein formschlüssiges Halten der Behälter 2 ausgebildet sein. Vorzugsweise können die Positionierelemente 6 auf die Behälter 2 eine ausreichend starke vertikale Haltekraft ausüben, um auszusondernde Behälter 2i auch ohne Unterstützung von unten durch Einklemmen zwischen den Positionierelementen 6 bis in den Ausleitbereich 32 zu führen.

Durch eine geeignete Variation der Geschwindigkeit V2 beim Abbremsen der Behälter 2 lässt sich auf einfache Weise einstellen, wie viele Behälter 2 entlang der Förderstrecke 8 aufeinander auflaufen, ebenso die Größe der daraus resultierenden Lücke 9b zwischen aufeinander folgenden Behältergruppen 9. Das Gruppieren der Behälter 2 lässt sich zusätzlich dadurch flexibel gestalten, dass nachlaufende Fahrzeuge 5b mit den zugehörigen Positionierelementen 6b zum Zusammenschieben oder Klemmen der Behältergruppen 9 verwendet werden. Hierzu ist lediglich eine ausreichende Anzahl von Fahrzeugen 5 im Wartebereich 18 sicherzustellen.

Die beschriebene Vorrichtung ermöglicht ein besonders kompaktes und flexibles Gruppieren von Behältern 2 bei im Wesentlichen unveränderter Fördergeschwindigkeit des Behälterstroms insgesamt. Die für das anschließende Verteilen der Behältergruppen 9 benötigten Lücken 9b zum Eingreifen von Ablenkklappen 15 oder dergleichen ergeben sich als Nebeneffekt beim Zusammenschieben der einzelnen Behälter 2 zu den Behältergruppen 9.

Hierfür sind vergleichsweise geringe relative Geschwindigkeitsunterschiede, beispielsweise zwischen den Geschwindigkeiten V1 und V2, nötig, so dass die Konstruktion der Vorrichtung für das Gruppieren, Aussondern und Verteilen der Behälter 2 aufgrund geringer Verzögerungen der Behälter 2 vereinfacht wird. Das Fehlen einzelner ausgesonderter Behälter 2i in den auf die Förderbahnen 14 verteilten Behältergruppen 9' lässt sich auf flexible Weise beim Gruppieren der Behälter 2 und/oder beim Verteilen der Behältergruppen 9, 9c kompensieren. Folglich lässt sich der Behälterstrom im Wesentlichen gleichmäßig auf die nachfolgenden Fördergassen 14 aufteilen und nachfolgende Verpackungsmaschinen oder dergleichen (nicht dargestellt) mit gleichmäßiger Auslastung beschicken.

## Patentansprüche

1. Vorrichtung zum Gruppieren, und insbesondere zum Aussondern und/oder Verteilen, von in einem Behälterstrom geförderten Behältern (2), mit einem Auslaufstern (3) und mit einem unmittelbar anschließenden Auslaufförderer (4), der umfasst:
- mehrere, mittels Linearmotorantrieb, separat angetriebene Fahrzeuge (5), an denen Positionierelemente (6) zum Beeinflussen der Förderposition (2') eines Behälters relativ zum Behälterstrom befestigt sind; und
- eine Förderstrecke (8) für die Behälter, entlang der die Fahrzeuge beim Gruppieren der Behälter laufen,
wobei der Auslaufförderer (4) derart ausgebildet ist, dass die Fahrzeuge (5) selektiv entlang der Förderstrecke (8) auf wenigstens eine vorgegebene Geschwindigkeit (V2) verzögert werden können, und wobei der Auslaufförderer (4) wenigstens ein Förderband (10) umfasst, auf dem die Behälter (2) beim Gruppieren stehen.

2. Vorrichtung nach Anspruch 1, wobei der Auslaufförderer (4) derart ausgebildet ist, dass die Fahrzeuge (5) unabhängig voneinander zum Auslaufstern (3) fahren und mit den Positionierelementen (6) vor und/oder nach einer individuell vorgebbaren Abfolge von Behältern (2) in den Behälterstrom eingreifen.

3. Vorrichtung nach wenigstens einem der vorigen Ansprüche, ferner mit einer Verteileinrichtung (13), um im Auslaufförderer (4) gebildete Behältergruppen (9) auf wenigstens zwei Fördergassen (14) zu verteilen.

4. Vorrichtung nach Anspruch 3, wobei die Verteileinrichtung (13) wenigstens eine Ablencklappe (15) umfasst und derart ausgebildet ist, dass die Ablenkklappe jeweils in Lücken (9b) zwischen den gebildeten Behältergruppen (9) eingreift.

5. Vorrichtung nach wenigstens einem der vorigen Ansprüche, wobei der Auslaufförderer (4) ferner eine Rückführbahn (17) zum Zurückführen der Fahrzeuge (5) zum Auslaufstern (3) umfasst.

6. Vorrichtung nach Anspruch 5, wobei an der Rückführbahn (17) wenigstens ein Ausleitbereich (32) für aus dem Behälterstrom auszusondernde Behälter (2i) ausgebildet ist.

7. Vorrichtung nach wenigstens einem der vorigen Ansprüche, wobei die Positionierelemente (6) Zentrierabschnitte (20) umfassen, die die Behälter beim Beeinflussen ihrer Förderposition (2') quer zum Behälterstrom zentrieren.

8. Verfahren zum Gruppieren und/oder Aussondern von in einem Behälterstrom geförderten Behältern (2), insbesondere Flaschen, mit der Vorrichtung nach wenigstens einem der vorigen Ansprüche, bei dem wenigstens ein erster Behälter (2a) einer zu bildenden Behältergruppe (9a) mit einem der Positionierelemente (6a) vorauslaufend kontaktiert wird und das zugehörige Fahrzeug (5a) derart verzögert wird, dass die Behälter (2b-2g) der Behältergruppe (9a) auf einander auflaufen, wobei ein vom Auslaufstern (3) vorgegebener Förderabstand (T1) zwischen den Behältern (2) innerhalb der gebildeten Behältergruppen (9) verringert und gleichzeitig zwischen den Behältergruppen vergrößert wird.

9. Verfahren nach Anspruch 8, wobei ferner der letzte Behälter (2g) der zu bildenden Behältergruppe (9a) nachlaufend mit einem Positionierelement (6b) kontaktiert wird, derart dass die Behälter (2a-2g) der Behältergruppe (9a) zusammen geschoben und insbesondere geklemmt werden.

10. Verfahren nach Anspruch 8 oder 9, wobei aus dem Behälterstrom auszusondernde Behälter (2i) zwischen vorlaufenden und nachlaufenden Positionierelementen (6a, 6b) eingeklemmt werden und von den zugehörigen Fahrzeugen (5a, 5b) in einen Ausleitbereich (32) geführt werden.

11. Verfahren nach einem der Ansprüche 8 bis 10, wobei die Behälter (2) gruppenweise auf parallel geschaltete Fördergassen (14) verteilt werden.

12. Verfahren nach Anspruch 11, wobei das Fehlen aus dem Behälterstrom ausgesonderter Behälter (2i) durch Anpassen der Größe der gebildeten Behältergruppen (9) und/oder durch gewichtetes Verteilen der gebildeten Behältergruppen auf die Fördergassen (14) kompensiert wird, um die Anzahl der insgesamt geförderten Behälter (2) gleichmäßig auf die Fördergassen zu verteilen.

## Claims

1. Device for grouping, and in particular for sorting out and/or distributing, containers (2) conveyed in a container flow, with an outlet star wheel (3) and with an immediately adjoining outlet conveyor (4), which comprises:
- a plurality of separately driven, by linear motor drive, vehicles (5), to which are attached positioning elements (6) to influence the conveying position (2') of a container relative to the container flow; and
- a conveyor section (8) for the containers along which the vehicles run during the grouping of the containers,
wherein the outlet conveyor (4) is developed in such a way that the vehicles (5) can be selectively decelerated along the conveyor section (8) to at least one stipulated speed (V2), and
wherein the outlet conveyor (4) comprises at least one conveyor belt (10) on which the containers (2) stand during the grouping.

2. Device according to Claim 1, wherein the outlet conveyor (4) is developed in such a way that the vehicles (5) drive independently of one another to the outlet star wheel (3) and, with the positioning elements (6), engage into the container flow before and/or after an individually selectable sequence of containers (2).

3. Device according to at least one of the preceding claims, furthermore with a distributing device (13) in order to distribute container groups (9) formed in the outlet conveyor (4) to at least two conveying channels (14).

4. Device according to Claim 3, wherein the distributing device (13) comprises at least one diverting flap (15) and is developed in such a way that the diverting flap engages in each of the gaps (9b) between the formed container groups (9).

5. Device according to at least one of the preceding claims, wherein the outlet conveyor (4) furthermore comprises a return track (17) to return the vehicles (5) to the outlet star wheel (3).

6. Device according to Claim 5, wherein developed on the return track (17) is at least one diversion area (32) for containers (2i) to be sorted out from the container flow.

7. Device according to at least one of the preceding claims, wherein the positioning elements (6) comprise centring sections (20) that centre the containers at a right angle to the container flow during the influencing of their conveying position (2').

8. Method for grouping and/or sorting out containers (2), in particular bottles, conveyed in a container flow with the device according to at least one of the preceding claims, in which at least a first container (2a) of a container group (9a) that is to be formed is contacted in front with a leading positioning element (6a) and in that the associated vehicle (5a) is decelerated in such a way that the containers (2b-2g) of the container group (9a) run into one another,
wherein a conveyor clearance (T1) stipulated by the outlet star wheel (3) is reduced between the containers (2) within the formed container groups (9) and simultaneously enlarged between the container groups.

9. Method according to Claim 8, wherein furthermore the last container (2g) of the container group (9a) that is to be formed is contacted behind it with a trailing positioning element (6b) in such a manner that the containers (2a-2g) of the container group (9a) are slid together and in particular squeezed.

10. Method according to Claim 8 or 9, wherein containers (2i) that are to be sorted out of the container flow are squeezed between leading and trailing positioning elements (6a, 6b) and are conducted by the associated vehicles (5a, 5b) into a diversion area (32).

11. Method according to one of the Claims 8 to 10, wherein the containers (2) are distributed in groups to conveying channels (14) that are connected in parallel.

12. Method according to Claim 11, wherein the absence of the containers (2) sorted out of the container flow is compensated by adjusting the size of the formed container groups (9) and/or by a weighted distribution of the formed container groups to the conveying channels (14) in order to uniformly distribute the total number of conveyed containers (2) to the conveying channels.

## Revendications

1. Dispositif pour grouper, et notamment pour extraire par tri et/ou répartir des contenants (2) transportés dans un flux de contenants, comprenant une étoile de sortie (3) et un transporteur de sortie (4) s'y raccordant directement et comportant :
- plusieurs véhicules (5) entraînés séparément, au moyen d'un entraînement à moteur linéaire, sur lesquels sont fixés des éléments de positionnement (6) destinés à influencer la position de transport (2') d'un contenant par rapport au flux de contenants ; et
- un parcours de transport (8) pour les contenants, le long duquel circulent les véhicules lors du groupage des contenants,
dans lequel le transporteur de sortie (4) est configuré de manière telle, que les véhicules (5) puissent être ralentis de manière sélective, le long du parcours de transport (8), à au moins une vitesse (V2) prédéterminée, et
dans lequel le transporteur de sortie (4) comprend au moins une bande transporteuse (10) sur laquelle reposent debout les contenants (2) lors du groupage.

2. Dispositif selon la revendication 1, dans lequel le transporteur de sortie (4) est configuré de manière telle, que les véhicules (5) circulent indépendamment les uns des autres vers l'étoile de sortie (3), et s'engagent avec les éléments de positionnement (6), dans le flux de contenants, avant et/ou après une suite de contenants (2) pouvant être prédéterminée individuellement.

3. Dispositif selon l'une au moins des revendications précédentes, comprenant, par ailleurs, un dispositif de répartition (13) destiné à répartir des groupes de contenants (9) formés dans le transporteur de sortie (4), vers au moins deux voies de transport (14).

4. Dispositif selon la revendication 3, dans lequel le dispositif de répartition (13) comprend au moins un volet de déviation (15) et est configuré de manière telle, que le volet de déviation vienne s'engager respectivement dans des intervalles libres (9b) entre les groupes de contenants (9) ayant été formés.

5. Dispositif selon l'une au moins des revendications précédentes, dans lequel le transporteur de sortie (4) comprend, par ailleurs, un parcours de retour (17) pour ramener les véhicules (5) à l'étoile de sortie (3).

6. Dispositif selon la revendication 5, dans lequel sur le parcours de retour (17) est formée au moins une zone d'évacuation (32) pour des contenants (2i) devant être extraits par tri du flux de contenants.

7. Dispositif selon l'une au moins des revendications précédentes, dans lequel les éléments de positionnement (6) comportent des tronçons de centrage (20), qui assurent le centrage des contenants lors de l'influence sur leur position de transport (2'), transversalement au flux de contenants.

8. Procédé pour grouper et/ou extraire par tri des contenants (2), notamment des bouteilles, transportés dans un flux de contenants, à l'aide du ;dispositif selon l'une au moins des revendications précédentes, procédé d'après lequel au moins un premier contenant (2a) d'un groupe de contenants (9a) à former, est amené au contact de l'un des éléments de positionnement (6a), qui le précède, et le véhicule (5a) associé est ralenti de manière telle, que les contenants (2b-2g) du groupe de contenants (9a) viennent buter les uns contre les autres,
d'après lequel un intervalle de transport (T1) entre les contenants (2), prédéfini par l'étoile de sortie (3), est diminué à l'intérieur des groupes de contenants (9) formés, et simultanément augmenté entre les groupes de contenants.

9. Procédé selon la revendication 8, d'après lequel, par ailleurs, un élément de positionnement (6b) succédant au dernier contenant (2g) du groupe de contenants (9a) à former, est amené au contact de ce dernier contenant de manière telle que les contenants (2a-2g) du groupe de contenants (9) soient rassemblés et notamment serrés mutuellement.

10. Procédé selon la revendication 8 ou la revendication 9, d'après lequel des contenants (2i) à extraire par tri du flux de contenants, sont enserrés entre des éléments de positionnement (6a, 6b), qui les précèdent et leur succèdent, et sont amenés par les véhicules (5a, 5b) associés, dans la zone d'évacuation (32).

11. Procédé selon l'une des revendications 8 à 10, d'après lequel les contenants (2) sont répartis par groupes vers des voies de transport (14) mutuellement en en parallèle.

12. Procédé selon la revendication 11, d'après lequel l'absence des contenants (2i) ayant été extraits du flux de contenants, par tri, est compensée par adaptation de la grandeur des groupes de contenants (9) formés et/ou par une répartition pondérée des groupes de contenants formés vers les voies de transport (14), pour répartir de manière uniforme le nombre des contenants (2) transportés au total, vers les voies de transport.
